**Europäisches Patentamt**

**European Patent Office**

**Office européen des brevets**

(19)

(11) Veröffentlichungsnummer : **0 186 624**
**B1**

(12) # EUROPÄISCHE PATENTSCHRIFT

(45) Veröffentlichungstag der Patentschrift :
**13.04.88**

(51) Int. Cl.⁴ : **F 16 C 7/00**

(21) Anmeldenummer : **85810578.6**

(22) Anmeldetag : **05.12.85**

(54) Zug/Druck-Strebe aus faserverstärktem Kunststoff.

(30) Priorität : **11.12.84 CH 5873/84**

(43) Veröffentlichungstag der Anmeldung :
**02.07.86 Patentblatt 86/27**

(45) Bekanntmachung des Hinweises auf die Patenterteilung : **13.04.88 Patentblatt 88/15**

(84) Benannte Vertragsstaaten :
**CH DE FR GB IT LI SE**

(56) Entgegenhaltungen :
**EP-A- 0 029 093**
**EP-A- 0 030 996**
**EP-A- 0 059 163**
**FR-A- 2 496 836**
**GB-A- 2 071 812**
**US-A- 4 050 827**
**US-A- 4 433 933**

(73) Patentinhaber : **CIBA-GEIGY AG**
**Klybeckstrasse 141**
**CH-4002 Basel (CH)**

(72) Erfinder : **Devaud, Jean-Michel**
**St. Jakobsstrasse 86**
**CH-4132 Muttenz (CH)**

EP 0 186 624 B1

Jouve, 18, rue St-Denis, 75001 Paris, France

**Beschreibung**

Die Erfindung betrifft eine Zug/Druck-Strebe gemäss dem Oberbegriff des Patentanspruchs 1.

Derartige Verbund-Streben werden überall dort eingesetzt, wo es auf hohe Belastbarkeit bei gleichzeitig möglichst niedrigem Gewicht ankommt, beispielsweise also etwa im Flugzeugbau oder dergleichen.

Bisherige Streben dieser Art bestehen vielfach aus einem zylindrischen faserverstärkten Kunststoffrohr, an dessen Enden je ein Krafteinleitungselement in Form einer Metallglocke mit daran ausgebildetem Auge befestigt ist. Metallglocke und Rohrende weisen gegengleich geschäftete Ränder auf und sind über die durch die Schäftung entstandenen konischen Passflächen miteinander verklebt.

Bei diesen bekannten Streben sind also zwei so verschiedenartige Materialien wie faserverstärkter Kunststoff und Metall direkt miteinander verklebt. Dies führt zu unerwünschten Spannungen im Klebebereich, welche die Festigkeit der Verbindung erheblich beeinträchtigen. Ausserdem sind solche herkömmlichen Streben immer noch relativ schwer.

Bei einer anderen Art von bekannten Zug/Druckstreben sind die metallischen Krafteinleitungselemente in das Kunststoffrohr integriert, d.h., sie werden bereits bei der Rohrherstellung in das Fasergefüge eingebaut und dort verankert. Diese Konstruktion ist bezüglich Herstellung relativ aufwendig und ausserdem ebenso kritisch in Bezug auf Temperaturschwankungen wie die weiter oben beschriebene Strebenart.

In der prioritätsälteren EP-A- 149 979 (entsprechend US-Pat.-Anm. Ser. No. 689.527 vom 7. Jan. 1985) ist eine gegenüber den vorstehend beschriebenen Streben verbesserte Strebe offenbart. Bei dieser Strebe ist in die flaschenhalsartig verjüngten Enden eines mit Kohle-oder Aramidfasern verstärkten Kunststoffrohrs je ein hohlzylindrischer Zapfen mit annähernd gleichen Festigkeits- und thermischen Dehnungseigenschaften wie das Rohrmaterial eingeklebt, und in die beiden Zapfen sind ringschraubenförmige Krafteinleitungselemente aus Metall eingeschraubt. Durch diese Konstruktion werden unerwünschte Spannungen im Krafteinleitungsbereich vermieden bzw. reduziert.

Weitere Streben- und Wellenkonstruktionen mit faserverstärkten Rohren sind z.B. in US-A-4 050 827, US-A-4 358 284, US-A-4 421 497, EP-A-59 163 (entspr. US-Pat.-Anm. Ser. No. 347 403 vom 2. Okt. 1982), FR-A-2 496 836 und US-A-4 433 933 beschrieben.

Durch die Erfindung soll nun eine konstruktiv vereinfachte und entsprechend einfach herstellbare Zug/Druckstrebe geschaffen werden, deren Krafteinleitung insbesondere hinsichtlich Temperaturschwankungen problemlos ist.

Die erfindungsgemässe Zug/Druckstrebe, die diesen Anforderungen genügt, ist im Patentanspruch 1 beschrieben. Bevorzugte Ausführungsformen und Weiterbildungen ergeben sich aus den abhängigen Ansprüchen.

Bei Kupplungen für elastische Kunststoffschläuche sind weitestgehend ähnliche Konstruktionen bekannt. Allerdings beruht dort die Befestigung der Kupplungselemente in den Schlauchenden auf dem durch die elastische Nachgiebigkeit des Schlauches erzwungenen Formschluss. Ausserdem müssen Schlauchkupplungen üblicherweise keine nennenswerten Längskräfte übertragen.

In DE-A-30 07 896 ist eine Anschlussverbindung für Faserkunststoffrohre beschrieben, bei der ein metallisches Kraftanschlusselement mit einer längsgerichteten Umfangsverzahnung versehen und derart auf das Faserkunststoffrohr auf- bzw. in dieses eingepresst ist, dass das Anschlusselement mit dem Faserkunststoffrohr in Drehrichtung eine formschlüssige Verbindung bildet. Diese bekannte Anschlussverbindung ist ausschliesslich für Torsionswellen bestimmt, nicht jedoch für Zug/Druckstreben und für diese auch nicht geeignet.

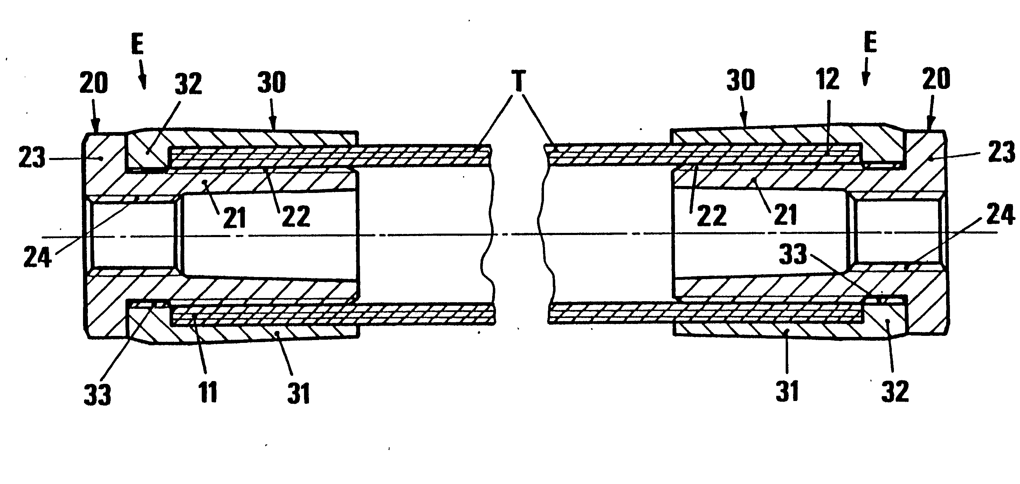

Im folgenden wird ein Ausführungsbeispiel einer erfindungsgemässen Zug/Druckstrebe anhand der Zeichnung erläutert. Die einzige Zeichnungsfigur zeigt einen Axialschnitt durch eine erfindungsgemässe Strebe.

Die dargestellte Strebe umfasst ein mit z.B. Kohle- oder Aramidfaser verstärktes Kunststoffrohr T und zwei an je einem Ende 11 bzw. 12 des Rohrs T befestigte Krafteinleitungselemente E. Diese beiden Krafteinleitungselemente sind gleich ausgebildet und daher im folgenden auch mit gleichen Bezugszeichen versehen.

Jedes Krafteinleitungselement E besteht aus einem inneren Teil 20 und einem äusseren Teil 30. Der innere Teil 20 besteht aus einem hülsenförmigen Gewindeschaft 21 mit einem Aussengewinde 22 und einem radial auswärts gerichteten Flansch 23 mit einem Innengewinde 24. Der äussere Teil 30 besteht aus einer Stützhülse 31 und einem radial einwärts vorspringenden Flansch 32 mit einem Innengewinde 33.

Die Stützhülse 31 sitzt streng, eventuell unter Vorspannung, auf dem Ende 11 bzw. 12 des Kunststoffrohrs T. Der innere Teil 20 der Krafteinleitungselemente E ist mit seinem Gewindeschaft 21 direkt in das Rohrende 11 bzw. 12 eingeschraubt. Durch diese Verschraubung entsteht — bei entsprechender Abstimmung der Durchmesser von Rohr und Schaft — ein starker Kraftschluss zwischen Rohrwand und Gewindeschaft 21, welcher eine sichere Krafteinleitung gewährleistet. Aufgrund dieses Kraftschlusses können nicht nur Längskräfte, sondern bis zu gewissen Grenzen auch Drehmomente übertragen werden.

Zur Erhöhung des Kraftschlusses sowie auch zur leichteren Montage kann der Gewindeschaft 21 bzw. sein Aussengewinde 22 auch leicht konisch ausgebildet sein.

Das Innengewinde 24 dient zur Befestigung von weiteren Kraftübertragungsteilen.

Das Innengewinde 33 im Flansch 32 des äusseren Teils 30 greift in das Aussengewinde 22 des Gewindeschafts 21 ein. Dies ist bei der Montage der Krafteinleitungselemente E vorteilhaft. Nachdem die Stützhülsen 31 auf die Rohrenden 11 und 12 aufgezogen sind, brauchen dann nur noch die inneren Teile 20 zuerst in die äusseren Teile 30 und dann weiter in die Rohrenden 11 und 12 eingeschraubt zu werden. Dabei können die nötigen Drehmomente direkt an den beiden Teilen der Krafteinleitungselemente angreifen, so dass auf das Rohr selbst kein Torsionsmoment wirkt. Durch diese Verbindung wird auch der Anteil der Längskraft, der durch die Stützhülse übernommen wird, auf den Gewindeschaft übertragen.

Die dargestellte erfindungsgemässe Zug/Druckstrebe ergibt einen gegenüber bekannten Konstruktionen sehr steifen Kraftanschluss, der auch bis zu einem gewissen Grad Drehmomente und Biegemomente übertragen kann. Sie ist bezüglich Temperaturschwankungen völlig unproblematisch und vor allem besonders einfach herstellbar, insbesondere da aufgrund der durch Gewinde erzeugten Klemmwirkung keine engen Toleranzen eingehalten werden müssen.

Es versteht sich, dass für geringere Festigkeitsanforderungen der äussere Teil 30 der Krafteinleitungselemente E auch entfallen kann. Eventuell können die Rohrenden 11 und 12 auch auf andere Weise, z.B. durch zusätzliche Verstärkungsfasern bzw. Wandverdickungen im Eingriffsbereich des Gewindeschafts 21 verstärkt sein.

**Patentansprüche**

1. Zug/Druckstrebe mit einem mit Fasern hoher Steifigkeit verstärkten Kunststoffrohr (T) und an den Enden (11,12) desselben befestigten Krafteinleitungselementen (E) aus Metall, dadurch gekennzeichnet, dass die Krafteinleitungselemente (E) einen mit einem Aussengewinde (22) versehenen metallenen Gewindeschaft (21) aufweisen und mit diesem Gewindeschaft (21) direkt in die Enden (11,12) des Kunststoffrohrs (T) eingeschraubt sind, wobei der Gewindeschaft (21) so bemessen ist, dass die Kraftübertragung im wesentlichen durch Kraftschluss (Reibung) erfolgt.

2. Strebe nach Anspruch 1, dadurch gekennzeichnet, dass der Gewindeschaft (21) oder sein Aussengewinde (22) leicht konisch ausgebildet ist.

3. Strebe nach Anspruch 1 oder 2, dadurch gekennzeichnet, dass die Krafteinleitungselemente (E) je eine auf den Enden (11,12) des Kunststoffrohrs (T) streng sitzende Stützhülse (31) aufweisen.

4. Strebe nach Anspruch 3, dadurch gekennzeichnet, dass die Stützhülsen (31) einen radial einwärts vorspringenden, mit einem Innengewinde (33) versehenen Flansch (32) aufweisen, der mit dem Gewindeschaft (21) verschraubt ist.

5. Strebe nach Anspruch 3 oder 4, dadurch gekennzeichnet, dass die Stützhülsen (31) unter radialer bzw. Umfangsspannung auf den Enden (11,12) des Kunststoffrohrs (T) sitzen.

6. Strebe nach einem der Ansprüche 1 bis 5, dadurch gekennzeichnet, dass die Gewindeschäfte (21) hülsenförmig ausgebildet und mit einem Innengewinde (24) versehen sind.

7. Strebe nach Anspruch 3, dadurch gekennzeichnet, dass die Stützhülsen (31) mit den zugeordneten Gewindeschäften (21) mechanisch verbunden oder verklebt sind.

**Claims**

1. Tension-compression stay comprising a synthetic resin tube (T), reinforced by fibres of high rigidity, and metal force-introducing elements (E) fastened to the ends (11,12) of the said tube, characterised in that the force-introducing elements (E) have a metallic thread-bearing shaft (21) having an external thread (22), and are screwed directly into the ends (11, 12) of the synthetic resin tube (T) by means of the said thread-bearing shaft (21), the thread-bearing shaft (21) being dimensioned so that the transfer of force essentially occurs due to a frictional connection (friction).

2. Stay according to Claim 1, characterised in that the thread-bearing shaft (21) or its external thread (22) is slightly conically tapered.

3. Stay according to Claim 1 or 2, characterised in that force-introducing element (E) has a supporting sleeve (31) force-fitted on the ends (11, 12) of the synthetic resin tube (T).

4. Stay according to Claim 3, characterised in that the supporting sleeves (31) comprise a radially inwardly projecting flange (32) with an internal thread (33), the said flange being screwed to the thread-bearing shaft (21).

5. Stay according to Claim 3 or 4, characterised in that the supporting sleeves (31) are seated on the ends (11, 12) of the synthetic resin tube (T) under radial or circumferential tension.

6. Stay according to one of Claims 1 to 5, characterised in that the thread-bearing shafts (21) are shaped as bushings and have an internal thread (24).

7. Stay according to Claim 3, characterised in that the supporting sleeves (31) are connected mechanically or by gluing with the thread-bearing shafts (21) associated with them.

**Revendications**

1. Bielle de traction poussée comprenant un tube (T) en matière plastique renforcée par des fibres à haute rigidité et des éléments métalliques d'introduction de forces (E) fixés aux extrémités (11,12) dudit tube, caractérisée par le fait que les éléments d'introduction de force (E) présentent une tige filetée (21) métallique, munie d'un filetage extérieur (22) et sont vissés au moyen de ladite tige filetée (21) directement dans les extrémités (11,12) du tube (T), ladite tige filetée (21) étant dimensionnée de telle sorte que la transmission des forces s'effectue, essentiellement par liaison par serrage (frottement).

2. Bielle selon la revendication 1, caractérisée par le fait que la tige filetée (21) ou son filetage extérieur (22) a une forme légèrement conique.

3. Bielle selon la revendication 1 ou 2, caractérisée par le fait que chaque élément d'introduction des forces (E) présente une douille de renfort (31) montée à ajustement serré sur une extrémité (11, 12) du tube (T) en matière plastique.

4. Bielle selon la revendication 3, caractérisée par le fait que les douilles de renfort (31) présentent une bride (32) faisant saillie radialement vers l'intérieur et munie d'un filetage intérieur (33), ladite bride étant vissée sur la tige filetée (21).

5. Bielle selon la revendication 3 ou 4, caractérisée par le fait que les douilles de renfort (31) sont montées sur les extrémités (11,12) du tube (T) en matière plastique avec une tension radiale ou tension périphérique.

6. Bielle selon l'une des revendications 1 à 5, caractérisée par le fait que les tiges filetées (21) sont réalisées sous forme de douilles et sont munies d'un filetage intérieur (24).

7. Bielle selon la revendication 3, caractérisée par le fait que les douilles de renfort (31) sont reliées mécaniquement ou assemblées par collage avec les tiges filetées (21) qui leur sont associées.